# EUROPEAN PATENT SPECIFICATION

(11) **EP 4 019 185 B1**
(45) Date of publication and mention of the grant of the patent: **12.06.2024**
(21) Application number: 20877957.9
(22) Date of filing: 22.09.2020
(51) Int. Cl.: B23K 37/04, B23K 37/02, B23K 101/36, H01M 50/516, B25B 11/02, B23K 101/38, B23K 26/22, B23K 26/244, B23K 31/02, H01M 10/052

(54) **WELDING JIG**
SCHWEISSLEHRE
GABARIT DE SOUDAGE

(30) Priority: 18.10.2019 KR 20190130073
(43) Date of publication of application: 29.06.2022
(73) Proprietor: LG ENERGY SOLUTION, LTD., Seoul 07335 (KR)
(72) Inventor: KIM, Kyung-Mo, Daejeon 34122 (KR); CHI, Ho-June, Daejeon 34122 (KR); KIM, Kyung-Woo, Daejeon 34122 (KR); MUN, Jeong-O, Daejeon 34122 (KR); PARK, Jin-Yong, Daejeon 34122 (KR); PARK, Jhin-Ha, Daejeon 34122 (KR); JIN, Hee-Jun, Daejeon 34122 (KR)
(74) Representative: Hoffmann Eitle
(86) International application number: PCT/KR2020/012798
(87) International publication number: WO 2021/075746

(56) References cited:
- WO-A1-2018/131843
- WO-A1-2019/074211
- WO-A1-2019/135505
- WO-A1-2019/194416
- CN-A- 110 280 950
- CN-A- 110 280 950
- KR-A- 20110 105 620
- KR-A- 20150 049 463
- KR-A- 20180 033 868
- KR-Y1- 0 133 699

## Description

### TECHNICAL FIELD

The present disclosure relates to a welding jig.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module having at least one battery cell first, and then configure a battery pack by using at least one battery module and adding other components.

In the case of a conventional battery module, an electrode lead of a battery cell and a sensing bus bar of a bus bar assembly are closely pressed using a welding jig to weld the electrode lead and the sensing bus bar by laser welding or the like.

However, in the case of the conventional welding jig, the welding position is frequently deviated due to an assembly tolerance or a position tolerance between the electrode lead and the sensing bus bar. If the welding position is deviated, the welding quality is deteriorated, which may cause a defect in the battery module.

Therefore, there is a demand to find a measure for providing a welding jig that may guide to an appropriate designated position so that the welding position is not deviated when welding the electrode lead of the battery cell and the sensing bus bar.

CN 110 280 950 A (forming the basis for the preamble of claim 1) relates to a square battery module clamping tool. The clamping tool comprises a side plate clamping assembly, an end plate pressing assembly, and a bus bar clamping plate. The battery module is sandwiched between the end plate reference block and the end plate pressing mechanism, and is covered by the bus bar clamping plate from above. The soldering tip welds the bus bar to the cell through soldering holes in the blocks.

WO 2019/074211 A1 relates to a bus bar assembly for electrode lead bonding and a battery module including the same. A bus bar support frame is attached to the front/rear surface of the laminate of the battery cell. The bus bar support frame is a plate-like structure in which the electrode lead passes through a position corresponding to the fitting space between the insertion bus bar and the pair of sides.

KR 2015 0049463 A concerns a horizontal control jig and a method of horizontally controlling by using the same.

WO 2019/194416 A1 concerns a pressurization jig for pressurizing a bus bar and a battery module manufacturing system comprising the same.

WO 2019/135505 A1 concerns a laser welding apparatus comprising a laser beam blocking block.

### DISCLOSURE

### Technical Problem

The present disclosure is directed to providing a welding jig, which may guide positioning to a designated position so that welding quality is not deteriorated when welding an electrode lead of a battery cell and a sensing bus bar.

In addition, the present disclosure is also directed to providing a welding jig, which may bring the electrode lead and the sensing bus bar into close contact with each other more effectively when welding the electrode lead of the battery cell and the sensing bus bar.

### Technical Solution

In one aspect of the present disclosure, there is provided a welding jig for welding an electrode lead of a battery cell and a sensing bus bar of a bus bar assembly to each other, as defined in claim 1. The welding jig comprises: a jig body disposed above the electrode lead and the sensing bus bar during the welding; and a positioning guide unit provided to the jig body and configured to make a step correction in at least three directions when the electrode lead and the sensing bus bar are welded.

The positioning guide unit includes a first positioning guider provided to the jig body and configured to be elastically movable in an upper and lower direction of the jig body; and a second positioning guider provided to the jig body and configured to be elastically movable in a left and right direction of the jig body.

The positioning guide unit includes a third positioning guider provided to the jig body and configured to be tiltable at a predetermined angle in an upper and lower direction at left and right sides of the jig body.

The first positioning guider may include a vertical positioning guider configured to be movable along an upper and lower direction of the jig body and provided to contact a top end of the sensing bus bar; and a vertical elastic portion elastically connected to the vertical positioning guider and configured to guide movement of the vertical positioning guider.

The vertical positioning guider may have at least one positioning protrusion for fixing the sensing bus bar.

The at least one positioning protrusion may be configured to be inserted in at least one positioning groove of the sensing bus bar.

The second positioning guider may include a side positioning guider configured to be movable along a left and right direction of the jig body and provided to press the electrode lead toward the sensing bus bar; and a side elastic portion elastically connected to the side positioning guider and configured to guide movement of the side positioning guider.

The second positioning guider may have a manipulation lever connected to the side elastic portion and configured to guide a user manipulation for moving the side positioning guider.

The third positioning guider may include a tilting body provided to the jig body and configured to be tiltable at the predetermined angle; and a tilting guider connected to the tilting body and configured to guide a tilting operation of the tilting body.

The tilting guider may have a tilting lever configured to guide a user manipulation for the tilting operation.

### Advantageous Effects

According to various embodiments as above, it is possible to provide a welding jig, which may guide positioning to a designated position so that welding quality is not deteriorated when welding an electrode lead of a battery cell and a sensing bus bar.

In addition, according to various embodiments as above, it is possible to provide a welding jig, which may bring the electrode lead and the sensing bus bar into close contact with each other more effectively when welding the electrode lead of the battery cell and the sensing bus bar.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a welding jig according to an embodiment of the present disclosure.
FIG. 2 is a diagram for illustrating electrode leads of a battery cell and a sensing bus bar of a bus bar assembly, which are welded using the welding jig of FIG. 1.
FIG. 3 is a diagram for illustrating a bottom portion of the welding jig of FIG. 1.
FIG. 4 is a side view showing the welding jig of FIG. 1.
FIGS. 5 and 6 are diagrams for illustrating an operation of a first positioning guider of a positioning guide unit, employed at the welding jig of FIG. 1.
FIGS. 7 and 8 are diagrams for illustrating an operation of a second positioning guider of the positioning guide unit, employed at the welding jig of FIG. 1.
FIG. 9 is a diagram for illustrating an operation of a third positioning guider of the positioning guide unit, employed at the welding jig of FIG. 1.
FIGS. 10 to 13 are diagrams for illustrating a step correction using the welding jig of FIG. 1 when a step occurs due to the protrusion of only the sensing bus bar while the electrode leads of the battery cell and the sensing bus bar of the bus bar assembly are welded.
FIGS. 14 to 17 are diagrams for illustrating a step correction using the welding jig of FIG. 1 when the electrode leads and the sensing bus bar have different protruding heights while the electrode leads of the battery cell and the sensing bus bar of the bus bar assembly are welded.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways. In addition, for ease understanding of the present disclosure, the accompanying drawings are not drawn to real scale, but the dimensions of some components may be exaggerated.

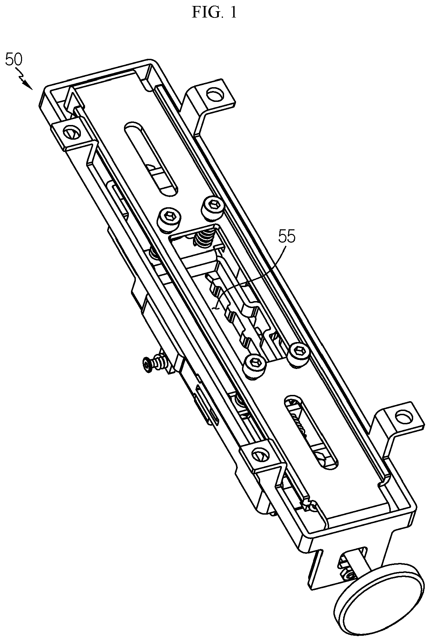

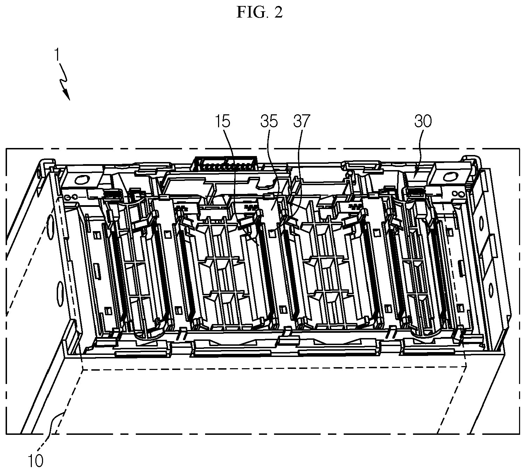

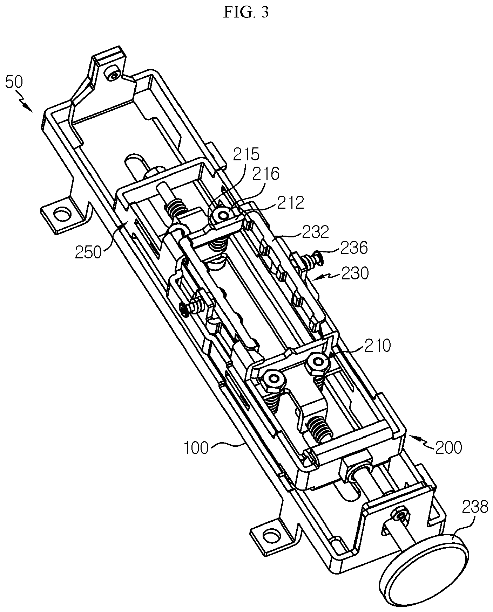

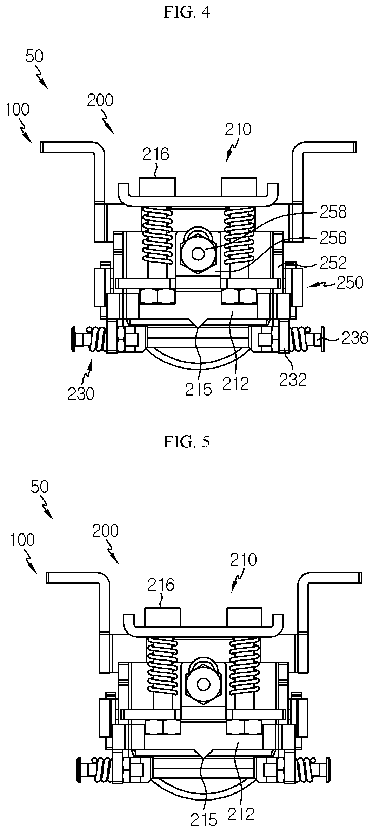

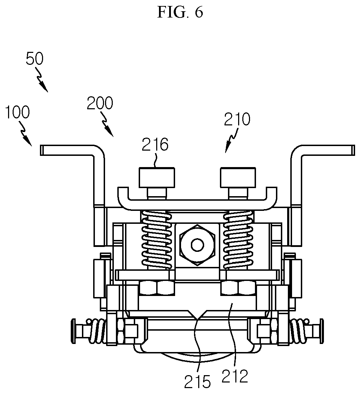

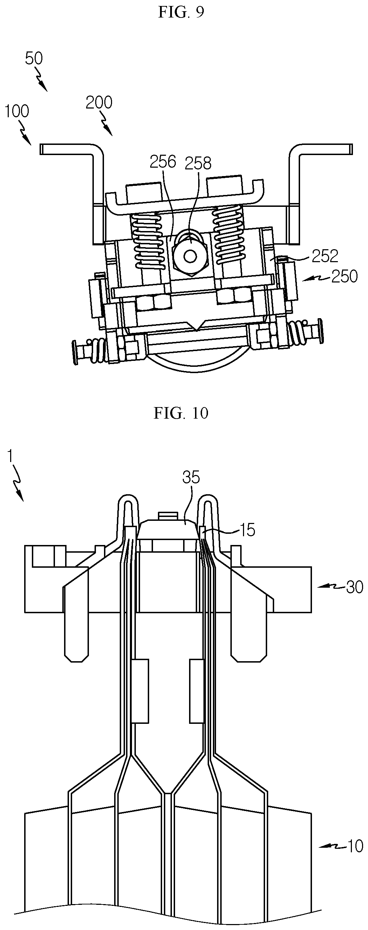

FIG. 1 is a diagram for illustrating a welding jig according to an embodiment of the present disclosure, FIG. 2 is a diagram for illustrating electrode leads of a battery cell and a sensing bus bar of a bus bar assembly, which are welded using the welding jig of FIG. 1, FIG. 3 is a diagram for illustrating a bottom portion of the welding jig of FIG. 1, FIG. 4 is a side view showing the welding jig of FIG. 1, FIGS. 5 and 6 are diagrams for illustrating an operation of a first positioning guider of a positioning guide unit, employed at the welding jig of FIG. 1, FIGS. 7 and 8 are diagrams for illustrating an operation of a second positioning guider of the positioning guide unit, employed at the welding jig of FIG. 1, and FIG. 9 is a diagram for illustrating an operation of a third positioning guider of the positioning guide unit, employed at the welding jig of FIG. 1.

Referring to FIGS. 1 to 9, a welding jig 50 is provided for welding an electrode lead 15 of at least one battery cell 10 of a battery module 1 and a sensing bus bar 35 of a bus bar assembly 30 to each other, and may have a welding opening 55 for laser welding or the like.

The welding jig 50 includes a jig body 100 and a positioning guide unit 200.

The jig body 100 forms an appearance of the welding jig 50 and may have the welding opening 55 at the center thereof. The jig body 100 is disposed above the electrode lead 15 of the at least one battery cell 10 and the sensing bus bar 35 of the bus bar assembly 30 during welding such as the laser welding.

The positioning guide unit 200 is provided to the jig body, and during the welding, the positioning guide unit 200 may bring the electrode lead 15 of the at least one battery cell 10 and the sensing bus bar 35 of the bus bar assembly 30 into close contact with each other and allow the electrode lead 15 and the sensing bus bar 35 to be positioned at desired locations.

The positioning guide unit 200 is configured to correct a step in at least three directions when welding the electrode lead 15 of the at least one battery cell 10 and the sensing bus bar 35 of the bus bar assembly 30.

Hereinafter, the positioning guide unit 200 according to this embodiment will be described in more detail.

The positioning guide unit 200 includes a first positioning guider 210, a second positioning guider 230, and a third positioning guider 250.

The first positioning guider 210 is provided to the jig body 100 and is configured to slide to be elastically movable along an upper and lower direction of the jig body 100.

The first positioning guider 210 may include a vertical positioning guider 212 and a vertical elastic portion 216.

The vertical positioning guider 212 is movable along the upper and lower direction of the jig body 100 and may contact the electrode lead 15 of the at least one battery cell 10 and a top end of the sensing bus bar 35 of the bus bar assembly 30.

The vertical positioning guider 212 may have at least one positioning protrusion 215 for fixing the sensing bus bar 35. Meanwhile, the sensing bus bar 35 may have at least one positioning groove 37 in which the at least one positioning protrusion 215 is inserted.

The vertical elastic portion 216 is elastically connected to the vertical positioning guider 212 and may guide the sliding movement of the vertical positioning guider 212 along the upper and lower direction.

The second positioning guider 230 is provided to the jig body 100 and is configured to slide to be elastically movable along a left and right direction of the jig body 100.

The second positioning guider 230 may include a side positioning guider 232, a side elastic portion 236, and a manipulation lever 238.

The side positioning guider 232 is movable along the left and right direction of the jig body 100 and may pressurize the electrode lead 15 of the at least one battery cell 10 toward the sensing bus bar 35 of the bus bar assembly 30 so that the electrode lead 15 and the sensing bus bar 35 are brought into close contact with each other.

The side elastic portion 236 is elastically connected to the side positioning guider 232 and may guide the sliding movement of the side positioning guider 232 along the left and right direction.

The manipulation lever 238 is connected to the side elastic portion 236 and may guide a user manipulation for moving the side positioning guider 232. By manipulating the manipulation lever 238, a user or the like may elastically slide the side positioning guider 232 in the left and right direction.

The third positioning guider 250 is provided to the jig body 100 and is configured to be provided to be tiltable at a predetermined angle in the upper and lower direction at left and right sides of the jig body 100.

The third positioning guider 250 may include a tilting body 252 and a tilting guider 256.

The tilting body 252 is provided to the jig body 100 and may be provided to be tiltable at the predetermined angle. The tilting operation at the predetermined angle may be a rotating operation.

The tilting guider 256 is connected to the tilting body 252 and may guide the tilting operation of the tilting body 252. The tilting guider 256 may include a tilting lever 258.

The tilting lever 258 is provided to the tilting guider 256 and may guide a user manipulation for the tilting operation. By manipulating the tilting lever 258, the user or the like may rotate the tilting body 252 by a tilting operation at a predetermined angle.

Hereinafter, the detailed operation of the welding jig 50 according to this embodiment will be described in more detail.

FIGS. 10 to 13 are diagrams for illustrating a step correction using the welding jig of FIG. 1 when a step occurs due to the protrusion of only the sensing bus bar while the electrode leads of the battery cell and the sensing bus bar of the bus bar assembly are welded.

Referring to FIG. 10, in the battery module 1, before the electrode lead 15 of the at least one battery cell 10 and the sensing bus bar 35 of the bus bar assembly 30 are welded, a step may occur between the lead electrode 15 and the sensing bus bar 35 due to an assembly tolerance or a position tolerance. For example, the sensing bus bar 35 of the bus bar assembly 30 may protrude higher than the electrode lead 15 of the at least one battery cell 10.

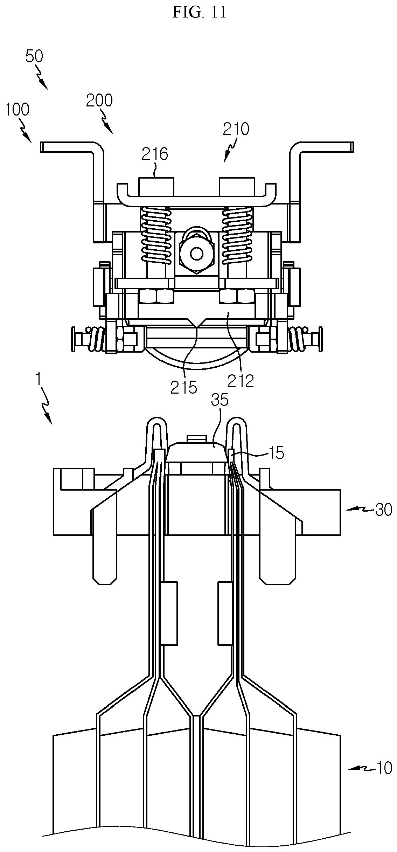

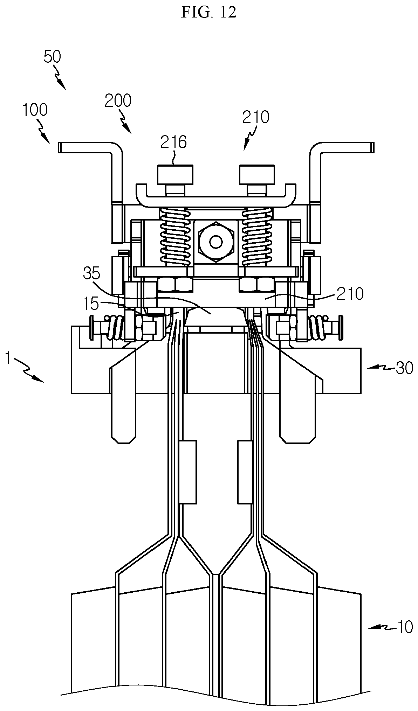

Referring to FIGS. 11 and 12, even when the sensing bus bar 35 protrudes upwardly higher than the electrode lead 15, the welding jig 50 according to this embodiment may adjust the step between the electrode lead 15 and the sensing bus bar 35.

Specifically, the step may be corrected using the first positioning guider 210 of the positioning guide unit 200. More specifically, the vertical positioning guider 212 of the first positioning guider 210 may be brought into close contact with the sensing bus bar 35 and then absorb the relative step between the electrode lead 15 and the sensing bus bar 35 while sliding in the upper and lower directions according to the elastic pressing force of the vertical elastic portion 216. By means of the first positioning guider 210, the step between the electrode lead 15 and the sensing bus bar 35 in the upper and lower direction according to the height may be corrected.

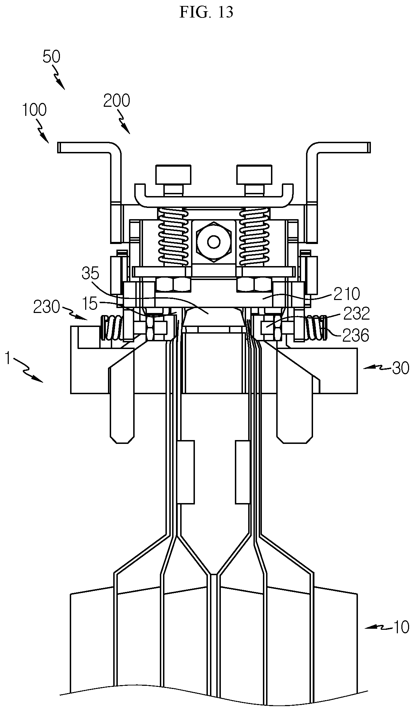

Referring to FIG. 13, the user, namely a manufacturer or the like, may bring the electrode lead 15 of the at least one battery cell 10 and the sensing bus bar 35 of the bus bar assembly 30 into close contact with each other in the left and right direction by using the second positioning guider 230 of the positioning guide unit 200.

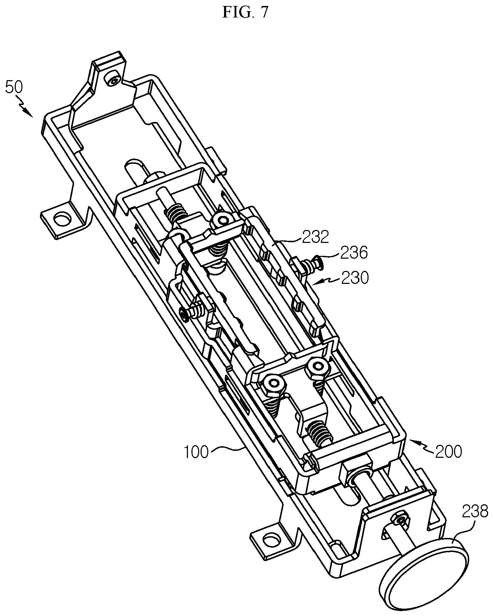

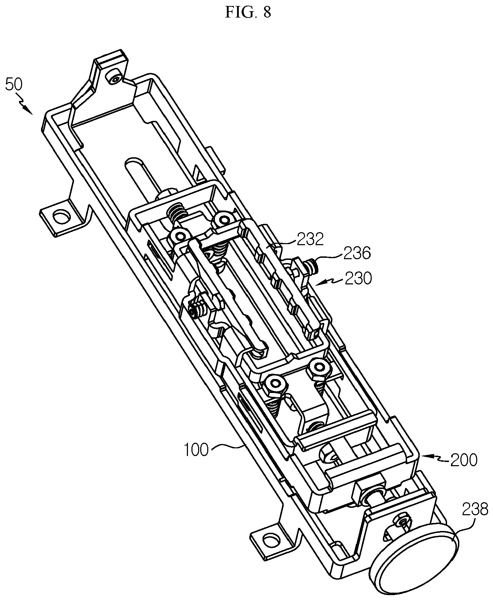

Specifically, the user such as the manufacturer may bring the electrode lead 15 and the sensing bus bar 35 into close contact with each other by manipulating the manipulation lever 238 (see FIGS. 7 and 8) of the second positioning guider 230 so that the side positioning guider 232 of the second positioning guider 230 slides in the left and right direction. Here, the side elastic portion 236 of the second positioning guider 230 may provide an elastic pressing force toward the side positioning guider 232 in the left and right direction. After that, the user such as the manufacturer may weld the electrode lead 15 and the sensing bus bar 35 to each other by laser welding or the like.

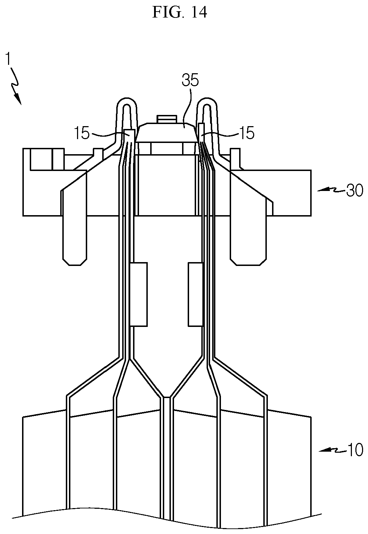

FIGS. 14 to 17 are diagrams for illustrating a step correction using the welding jig of FIG. 1 when the electrode leads and the sensing bus bar have different protruding heights while the electrode leads of the battery cell and the sensing bus bar of the bus bar assembly are welded.

Referring to FIG. 14, a step may occur in all of the sensing bus bar 35 and the electrode leads 15 at both sides of the sensing bus bar 35 due to an assembly tolerance or a location tolerance of the battery module 1, before welding. For example, the electrode lead 15 and the sensing bus bar 35 may be arranged in an inclined form from each other at a predetermined angle so that the electrode lead 15 at a left side of the sensing bus bar 35 has a lowest height and the electrode lead 15 at a right side of the sensing bus bar 35 has a highest height.

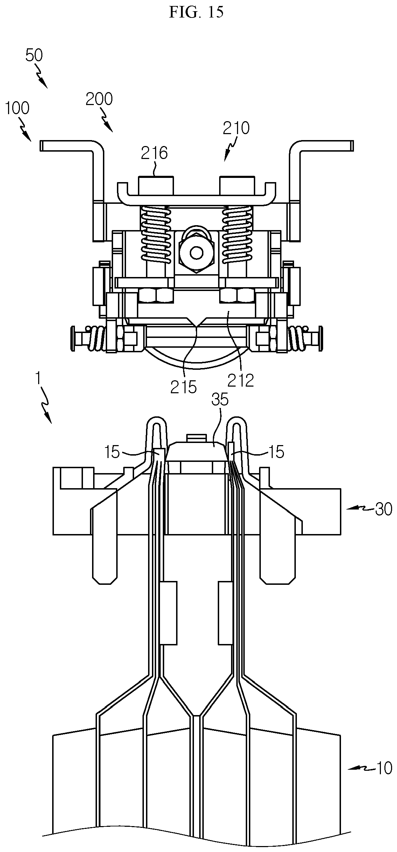

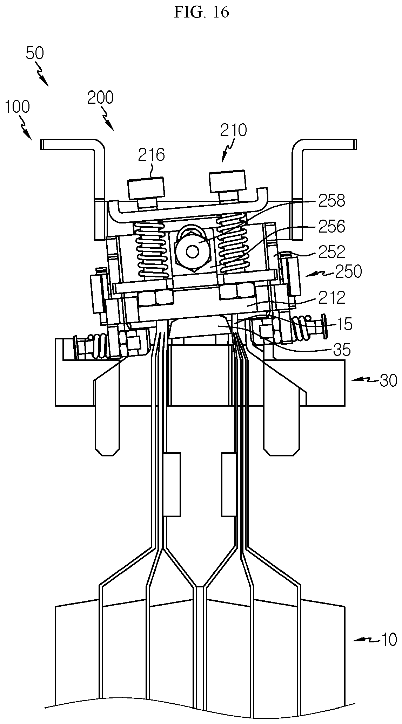

Referring to FIGS. 15 and 16, even when such a step occurs, the welding jig 50 may guide the electrode leads 15 and the sensing bus bar 35 to predetermined designated positions by correcting the step using the positioning guide unit 200.

Specifically, the step in an inclined shape at the predetermined angle may be corrected by means of the third positioning guider 210 of the positioning guide unit 200.

Specifically, the user such as the manufacturer may tilt the tilting body 252 by manipulating the tilting lever 258 of the tilting guider 256 of the third positioning guider 210. According to this tilting operation, the electrode leads 15 and the sensing bus bar 35 may be tilted according to the step angle, so that the step between them may be corrected. At this time, the first positioning guider 210 of the positioning guide unit 200 may press the sensing bus bar 35 to correct the step together with the third positioning guider 230.

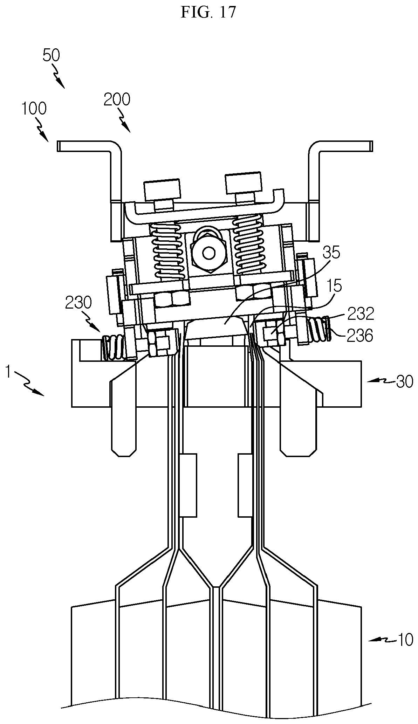

Referring to FIG. 17, the user such as the manufacturer may manipulate the manipulation lever 238 (see FIGS. 7 and 8) of the second positioning guider 230 so that the side positioning guider 232 of the second positioning guider 230 slides in the left and right directions to bring the electrode lead 15 and the sensing bus bar 35 into close contact with each other. After that, the user such as the manufacturer may weld the electrode lead 15 and the sensing bus bar 35 to each other by laser welding or the like.

As described above, even if an assembly tolerance or position tolerance occurs between the electrode lead 15 of the at least one battery cell 10 and the sensing bus bar 35 of the bus bar assembly 30, the welding jig 50 according to this embodiment may guide to an appropriate designated position for welding by correcting the step generated due to the tolerance.

Therefore, the welding jig 50 according to this embodiment may effectively prevent the welding position from being deviated due to the assembly tolerance or the position tolerance, thereby guaranteeing uniform welding quality between the electrode lead 15 and the sensing bus bar 35.

According to various embodiments as above, it is possible to provide a welding jig 50, which may guide positioning to a designated position so that welding quality is not deteriorated when welding an electrode lead 15 of a battery cell 10 and a sensing bus bar 35.

In addition, according to various embodiments as above, it is possible to provide a welding jig 50, which may bring the electrode lead 15 and the sensing bus bar 35 into close contact with each other more effectively when welding the electrode lead 15 of the battery cell 10 and the sensing bus bar 35.

While the embodiments of the present disclosure have been shown and described, it should be understood that the present disclosure is not limited to the specific embodiments described, and that various changes and modifications can be made within the scope of the appended claims.

## Claims

1. A welding jig (50) for welding an electrode lead (15) of a battery cell (10) and a sensing bus bar (35) of a bus bar assembly (30) to each other, the welding jig (50) comprising:
a jig body (100) suitable to be disposed above the electrode lead (15) and the sensing bus bar (35) during the welding; and
a positioning guide unit (200) provided to the jig body (100) and configured to make a step correction in at least three directions when the electrode lead (15) and the sensing bus bar (35) are welded;
wherein
the positioning guide unit (200) includes
a first positioning guider (210) provided to the jig body (100) and configured to be elastically movable in an upper and lower direction of the jig body (100);
a second positioning guider (230) provided to the jig body (100) and configured to be elastically movable in a left and right direction of the jig body (100); and the welding jig being **characterized in that** the positioning guide unit (200) further includes:
a third positioning guider (250) provided to the jig body (100) and configured to be tiltable at a predetermined angle in an upper and lower direction at left and right sides of the jig body (100).

2. The welding jig (50) according to claim 1,
wherein the first positioning guider (210) includes:
a vertical positioning guider (212) configured to be movable along an upper and lower direction of the jig body (100) and provided to contact a top end of the sensing bus bar (35); and
a vertical elastic portion (216) elastically connected to the vertical positioning guider (212) and configured to guide movement of the vertical positioning guider (212).

3. The welding jig (50) according to claim 2,
wherein the vertical positioning guider (212) has at least one positioning protrusion (215) for fixing the sensing bus bar (35).

4. The welding jig (50) according to claim 3,
wherein the at least one positioning protrusion (215) is configured to be inserted in at least one positioning groove (37) of the sensing bus bar (35).

5. The welding jig (50) according to claim 1,
wherein the second positioning guider (230) includes:
a side positioning guider (232) configured to be movable along a left and right direction of the jig body (100) and provided to press the electrode lead (15) toward the sensing bus bar (35); and
a side elastic portion (236) elastically connected to the side positioning guider (232) and configured to guide movement of the side positioning guider (232).

6. The welding jig (50) according to claim 5,
wherein the second positioning guider (230) has a manipulation lever (238) connected to the side elastic portion (236) and configured to guide a user manipulation for moving the side positioning guider (232).

7. The welding jig (50) according to claim 1,
wherein the third positioning guider (250) includes:
a tilting body (252) provided to the jig body (100) and configured to be tiltable at the predetermined angle; and
a tilting guider (256) connected to the tilting body (252) and configured to guide a tilting operation of the tilting body (252).

8. The welding jig (50) according to claim 7,
wherein the tilting guider (256) has a tilting lever (258) configured to guide a user manipulation for the tilting operation.

## Patentansprüche

1. Schweißlehre (50) zum Schweißen einer Elektrodenleitung (15) einer Batteriezelle (10) und einer Erfassungsstromschiene (35) einer Stromschienenanordnung (30), wobei die Schweißlehre (50) umfasst:
einen Lehrenkörper (100), der geeignet ist, um während des Schweißens über der Elektrodenleitung (15) und der Erfassungsstromschiene (35) angeordnet zu sein; und
eine Positionierungsführungseinheit (200), die am Lehrenkörper (100) bereitgestellt und konfiguriert ist, um eine Schrittkorrektur in mindestens drei Richtungen durchzuführen, wenn die Elektrodenleitung (15) und die Erfassungsstromschiene (35) geschweißt werden;
wobei
die Positionierungsführungseinheit (200) einschließt
eine erste Positionierungsführung (210), die am Lehrenkörper (100) bereitgestellt und konfiguriert ist, um in einer oberen und einer unteren Richtung des Lehrenkörpers (100) elastisch beweglich zu sein;
eine zweite Positionierungsführung (230), die am Lehrenkörper (100) bereitgestellt und konfiguriert ist, um in einer linken und einer rechten Richtung des Lehrenkörpers (100) elastisch beweglich zu sein; und
wobei die Schweißlehre **dadurch gekennzeichnet ist, dass** die Positionierungsführungseinheit (200) weiter einschließt:
eine dritte Positionierungsführung (250), die am Lehrenkörper (100) bereitgestellt und konfiguriert ist, um an der linken und der rechten Seite des Lehrenkörpers (100) in einer oberen und einer unteren Richtung in einem vorbestimmten Winkel neigbar zu sein.

2. Schweißlehre (50) nach Anspruch 1,
wobei die erste Positionierungsführung (210) einschließt:
eine vertikale Positionierungsführung (212), die konfiguriert ist, um entlang einer oberen und einer unteren Richtung des Lehrenkörpers (100) beweglich zu sein, und bereitgestellt ist, um ein oberes Ende der Erfassungsstromschiene (35) zu berühren; und
einen vertikalen elastischen Abschnitt (216), der elastisch mit der vertikalen Positionierungsführung (212) verbunden und konfiguriert ist, um die Bewegung der vertikalen Positionierungsführung (212) zu führen.

3. Schweißlehre (50) nach Anspruch 2,
wobei die vertikale Positionierungsführung (212) mindestens einen Positionierungsvorsprung (215) zum Fixieren der Erfassungsstromschiene (35) aufweist.

4. Schweißlehre (50) nach Anspruch 3,
wobei der mindestens eine Positionierungsvorsprung (215) konfiguriert ist, um in mindestens eine Positionierungsnut (37) der Erfassungsstromschiene (35) eingesetzt zu werden.

5. Schweißlehre (50) nach Anspruch 1,
wobei die zweite Positionierungsführung (230) einschließt:
eine Seitenpositionierungsführung (232), die konfiguriert ist, um entlang einer linken und einer rechten Richtung des Lehrenkörpers (100) beweglich zu sein, und bereitgestellt ist, um die Elektrodenleitung (15) in Richtung zu der Erfassungsstromschiene (35) zu drücken; und
einen elastischen Seitenabschnitt (236), der elastisch mit der Seitenpositionierungsführung (232) verbunden und konfiguriert ist, um die Bewegung der Seitenpositionierungsführung (232) zu führen.

6. Schweißlehre (50) nach Anspruch 5,
wobei die zweite Positionierungsführung (230) einen Bedienungshebel (238) aufweist, der mit dem elastischen Seitenabschnitt (236) verbunden und konfiguriert ist, um eine Benutzerbedienung zum Bewegen der Seitenpositionierungsführung (232) zu führen.

7. Schweißlehre (50) nach Anspruch 1,
wobei die dritte Positionierungsführung (250) einschließt:
einen Neigungskörper (252), der am Lehrenkörper (100) bereitgestellt und konfiguriert ist, um in dem vorbestimmten Winkel neigbar zu sein; und
eine Neigungsführung (256), die mit dem Neigungskörper (252) verbunden und konfiguriert ist, um einen Neigungsvorgang des Neigungskörpers (252) zu führen.

8. Schweißlehre (50) nach Anspruch 7,
wobei die Neigungsführung (256) einen Neigungshebel (258) aufweist, der konfiguriert ist, um eine Benutzerbedienung zum Neigungsvorgang zu führen.

## Revendications

1. Gabarit de soudage (50) pour souder un fil d'électrode (15) d'une cellule de batterie (10) et une barre omnibus de détection (35) d'un ensemble de barre omnibus (30) l'un avec l'autre, le gabarit de soudage (50) comprenant :
un corps de gabarit (100) approprié pour être disposé au-dessus du fil d'électrode (15) et de la barre omnibus de détection (35) pendant le soudage ; et
une unité de guidage de positionnement (200) prévue sur le corps de gabarit (100) et configurée pour réaliser une correction de pas dans au moins trois directions lorsque le fil d'électrode (15) et la barre omnibus de détection (35) sont soudés ;
dans lequel
l'unité de guidage de positionnement (200) inclut
un premier guide de positionnement (210) prévu sur le corps de gabarit (100) et configuré pour être mobile élastiquement dans une direction supérieure et inférieure du corps de gabarit (100) ;
un deuxième guide de positionnement (230) prévu sur le corps de gabarit (100) et configuré pour être mobile élastiquement dans une direction gauche et droite du corps de gabarit (100) ; et
le gabarit de soudage étant **caractérisé en ce que** l'unité de guidage de positionnement (200) inclut en outre :
un troisième guide de positionnement (250) prévu sur le corps de gabarit (100) et configuré pour pouvoir être incliné selon un angle prédéterminé dans une direction supérieure et inférieure sur les côtés gauche et droit du corps de gabarit (100).

2. Gabarit de soudage (50) selon la revendication 1,
dans lequel le premier guide de positionnement (210) inclut :
un guide de positionnement vertical (212) configuré pour être mobile le long d'une direction supérieure et inférieure du corps de gabarit (100) et prévu pour venir au contact d'une extrémité supérieure de la barre omnibus de détection (35) ; et
une partie élastique verticale (216) reliée élastiquement au guide de positionnement vertical (212) et configurée pour guider le déplacement du guide de positionnement vertical (212).

3. Gabarit de soudage (50) selon la revendication 2,
dans lequel le guide de positionnement vertical (212) présente au moins une saillie de positionnement (215) pour fixer la barre omnibus de détection (35).

4. Gabarit de soudage (50) selon la revendication 3,
dans lequel l'au moins une saillie de positionnement (215) est configurée pour être insérée dans au moins une rainure de positionnement (37) de la barre omnibus de détection (35).

5. Gabarit de soudage (50) selon la revendication 1,
dans lequel le deuxième guide de positionnement (230) inclut :
un guide de positionnement latéral (232) configuré pour être mobile le long d'une direction gauche et droite du corps de gabarit (100) et prévu pour presser le fil d'électrode (15) vers la barre omnibus de détection (35) ; et
une partie élastique latérale (236) reliée élastiquement au guide de positionnement latéral (232) et configurée pour guider le déplacement du guide de positionnement latéral (232).

6. Gabarit de soudage (50) selon la revendication 5,
dans lequel le deuxième guide de positionnement (230) présente un levier de manipulation (238) relié à la partie élastique latérale (236) et configuré pour guider la manipulation d'un utilisateur pour déplacer le guide de positionnement latéral (232).

7. Gabarit de soudage (50) selon la revendication 1,
dans lequel le troisième guide de positionnement (250) inclut :
un corps d'inclinaison (252) prévu sur le corps de gabarit (100) et configuré pour pouvoir être incliné selon l'angle prédéterminé ; et
un guide d'inclinaison (256) relié au corps d'inclinaison (252) et configuré pour guider une opération d'inclinaison du corps d'inclinaison (252).

8. Gabarit de soudage (50) selon la revendication 7,
dans lequel le guide d'inclinaison (256) présente un levier d'inclinaison (258) configuré pour guider la manipulation d'un utilisateur pour l'opération d'inclinaison.
